# EUROPEAN PATENT SPECIFICATION

(11) **EP 1 959 359 B1**
(45) Date of publication and mention of the grant of the patent: **22.11.2017**
(21) Application number: 07003386.5
(22) Date of filing: 19.02.2007
(51) Int. Cl.: G06F 17/30

(54) **A data management system**
Datenverwaltungssystem
Système de gestion de données

(43) Date of publication of application: 20.08.2008
(73) Proprietor: Tieto Oyj, 00440 Helsinki (FI)
(72) Inventor: Myllylahti, Jari, 00840 Helsinki (FI)
(74) Representative: Papula Oy

(56) References cited:
- EP-A- 1 591 914
- US-A1- 2004 225 664
- US-B1- 7 093 232
- A.EJAZ ET AL.: "Utilizing Staging Tables in Data Integration to Load Data into Materialized Views" SPRINGER VERLAG, [Online] vol. 3314/2004, 2004, pages 685-691, XP002439036 Berlin, Germany Retrieved from the Internet: URL:http://www.springerlink.com/content/u4 a41nnwvttje3hw/fulltext.pdf> [retrieved on 2007-06-25]
- MATENA V ET AL: "ENTERPRISE JAVABEANS - DRAFT SPECIFICATION, VERSION 0.9", SUN MICROSYSTEMS SPECIFICATION, XX, XX, no. V0.9, 4 February 1998 (1998-02-04), pages 1-177, XP002424103,

## Description

### FIELD OF THE INVENTION

The present invention relates to data management systems. Particularly, the invention relates to novel methods, a computer program and a data management system for managing data for example in near real-time environments.

### BACKGROUND OF THE INVENTION

Databases are typically used to store various kinds of data put in a certain format. In order to store data, a solution has to be provided to collect data into the database.

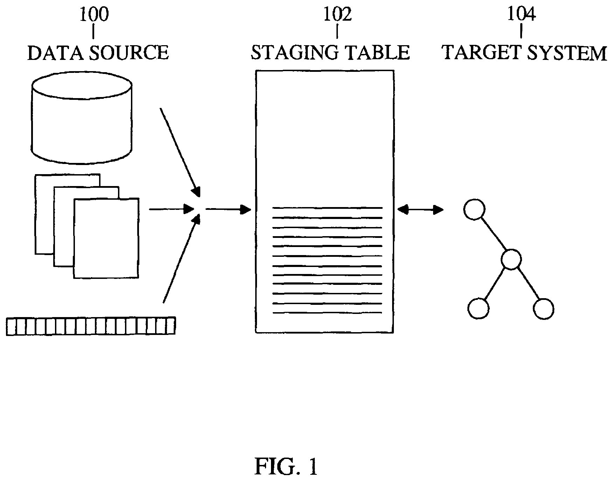

One a very typical way to collect data into a database system is to use an intermediate data store in the data collection process. Figure 1 discloses one example of a simple data collection and analyzing architecture. A data source 100 is a source that generates data about e.g. transactions. An exemplary transaction could be a sales transaction. A sales transaction occurs e.g. when one pays for his/her purchase at a cash desk. The cash register generates a transaction that includes e.g. time/date, what was purchased and what was the total amount of the purchases. A data source 100 represents the data source that temporarily stores the transaction data. The data source may take any appropriate form of data storage from which it is possible to load data for further processing. The data source 100 is e.g. a database or a flat file.

A data management system includes one or more loading processes that are arranged to load data from the data source into a temporary data storage area that is often called as "a staging area" or a "staging table" 102. The stating table 102 may, for example, include data relating to all the transactions of a single day. The data is typically indexed in the staging table 102. The loading process loads, for example, a whole day's transactions or for example 10000 transactions from the data source at a time and stores the transactions in the staging table with unique index in case of smaller set of rows than a whole day. Both methods apply. The next set of transactions will be stored after the previously indexed set of transactions with a new index. As transactions are loaded into the staging table, the size of the staging table increases.

The data management system further typically comprises one or more delivery processes that read data from the staging table and transfer it to a target system 104. When a delivery process has processed a set of transaction relating to a certain index, the data relating to the index has to be deleted from the staging table. This means also that the indexes have to be updated. The actual memory space which was previously allocated for the deleted transaction data relating to the index will not be freed. Therefore, as new transactions are loaded into the staging table, the size of the table increases all the time although some of the transaction data may already have been deleted by the delivery processes. One way to solve this problem is to use a cleaning operation every now and then. Due to the cleaning process, data loading processes and data delivery processes have to be suspended for the duration of the cleaning process and the index has to be rebuilt again.

One possible target system 104 in Figure 1 is a data warehouse. Previously, every near real time data warehousing project has often been implemented using uniquely designed processes which contain general data loading components trying to gather all the incoming data at particular point of time. Data warehousing processes has been structured in huge mappings. In come cases, even minor changes in one part of the process could result in large process modifications. Furthermore, the staging tables tend to hold data for the whole loading window (typically a day) and the loading addresses the whole period of data which results in long-running huge processes.

EP-A-1591914 discloses a method, computer program product and device for importing a plurality of data sets into a system. The method comprises providing data sets to be imported on a data storage medium; reading said data sets from said data storage medium; storing said data sets in a first table in said system, substantially without processing said data sets; reading said stored data sets from said first table, preferably data set by data set; and writing one or more data segments of each data set into sub-tables, each sub-table comprising at least one data field, said data field being preferably associated with predefined categories.

US-B1-7093232 discloses a component stager which accepts from developers one or more versions of a component of a product, and associates with each version a time that is one of a number of the periodically recurring times (also called "ticks"), e.g. an upcoming Wednesday, if the periodically recurring times happen on a weekly basis, i.e. every Wednesday. Such associations may be used to identify one or more versions that are associated with a specific tick, e.g. to identify the amount of work done between to ticks and/or to find versions that are currently available for release, which may be based on a most recent tick, or a tick associated with a milestone in the past.

The solution disclosed in US 2004/225664 stages data from various sources and performs an automated series of steps on the data to assimilate it into a master SKU table and to make it useable for and available to other applications, including systems for making the information available to a web site hosting an online store. The system includes the use of an abstraction layer to reconcile item identifiers between and amongst various data sources.

A. Ejaz et al.: "Utilizing Staging Tables in Data Integration to Load Data into Materialized Views", Springer Verlag, vol. 3314/2004, 2004, pages 685-691, XP002439046 Berlin, proposes an approach to data integration and migration from a collection of heterogeneous and independent data sources into a data warehouse schema.

Based on the above there is an obvious need for a data management system that would mitigate and/or alleviate the above drawbacks.

### SUMMARY OF THE INVENTION

According to one aspect of the invention, there is provided a computer-implemented method for processing data in a data managing system comprising at least one staging area into which data can be loaded. The following source data loading process loop is executed at least once for a data type of the source data: loading source data from a data source, wherein the loaded amount of source data constitutes a bucket and wherein the bucket comprises at least one row of data; creating a new partition in a staging area for the bucket, wherein the partition is a physical partition in the staging area; determining, based on an identifier scheme, a unique identifier for the bucket; assigning a partition identifier for the partition, the partition identifier comprising the unique identifier of the bucket; tagging each row of data in the bucket with the unique identifier; and storing the bucket in the partition identified by the partitionidentifier.

The following delivery process is executed at least once for the data type of the source data stored by the loading process: selecting a bucket stored by the loading process in a partition of a staging area; delivering the selected bucket to a target system; and updating in bucket deliverer's metadata that the delivery process has finished processing the bucket.

The following cleaning process is executed at predefined time intervals for a bucket type, the bucket type in bucket metadata indicating the data type of data in a bucket: checking, from the bucket metadata of a bucket, whether the bucket has been processed by all delivery processes processing the bucket; dropping the partition containing the bucket, when all delivery processes processing the bucket have processed the bucket; and updating in the bucket metadata that the bucket has been dropped.

According to another aspect of the invention, there is provided a computer program comprising program code configured to perform the method of the invention when executed in a data processing device.

According to another aspect of the invention, there is provided a data management system comprising at least one staging area in which source data can be stored. The data management system comprises a loading module for loading data in the data managing system, wherein the loading module is configured to execute the following source data loading process loop at least once for a data type of the source data: load source data from a data source, wherein the loaded amount of source data constitutes a bucket and wherein the bucket comprises at least one row of data; create a new partition in a staging area for the bucket, wherein the partition is a physical partition in the staging area; determine, based on an identifier scheme, a unique identifier for the bucket; assign a partition identifier for the partition, the partition identifier comprising the unique identifier of the bucket; and store the bucket in the partition identified by the partition identifier.

The data management system also comprises a delivery module for delivering data in the data managing system, wherein the delivery module is configured to execute the following delivery process at least once for the data type of the source data stored by the loading module: select a bucket stored by the loading process in a partition of a staging area; deliver the selected bucket to a target system; and update in bucket deliverer's metadata that the delivery process has finished processing the bucket.

The data management system also comprises a cleaning module for cleaning data in the data management system, wherein the cleaning module is configured to execute the following cleaning process at predefined time intervals for a bucket type, the bucket type in bucket metadata indicating the data type of data in a bucket: checking, from bucket metadata of a bucket, whether the bucket has been processed by all delivery processes processing the bucket; dropping the partition containing the bucket, when all delivery processes processing the bucket have processed the bucket; and updating in the bucket metadata that the bucket has been dropped.

In one embodiment, the loading module is further configured to generate bucket metadata for the bucket, the bucket metadata determining properties for the bucket stored in the partition. In one embodiment the bucket metadata comprises at least one of the following: bucket identifier, bucket type, number of records in the bucket, earliest record in the bucket, latest record in the bucket, status of the bucket, bucket start time, bucket end time and loaded rows per second.

In one embodiment, the loading module is further configured to store a duplicate of the bucket into an additional data store during the loading process, and provide the data with the same unique identifier.

In one embodiment, the bucket size is fixed. In another embodiment, the bucket size is changed at least once.

In one embodiment, the delivery module is configured to select the bucket based on at least of the following: a bucket identifier; and a time stamp in a bucket metadata.

In one embodiment, the delivery module is further configured to update the status information of the bucket in the bucket metadata to 'delivering', when starting processing the bucket with the delivery process.

In one embodiment, the delivery module is further configured to update bucket deliverer's metadata, when the delivery module starts processing the bucket, the updating comprising: adding a deliverer identifier in the bucket deliverer's metadata, and adding a deliverer start time in the bucket deliverer's metadata.

In one embodiment, the delivery module is further configured to update the bucket deliverer's metadata, when the delivery module ends processing the bucket, the updating comprising: adding a deliverer end time in the bucket deliverer's metadata.

In one embodiment, the delivery module is further configured to check, whether the bucket deliverer's metadata comprises other deliverer identifiers identifying delivery processes that process the same data type, check, whether there exists a deliverer end time for each deliverer identifier, and update the status information in the bucket metadata to 'delivered', when there exists a deliverer end time for each deliverer identifier.

In one embodiment, the data management system comprises delivery process metadata for each delivery process, the metadata comprising at least one of the following: an identifier of the delivery process, a name of the delivery process, a type of the delivery process, a description for the delivery process, priority of the delivery process, and a target bucket type of the delivery process.

In one embodiment, a priority is set to at least one delivery process.

In one embodiment, the amount of simultaneously executed delivery processes is limited.

In one embodiment, the properties of at least one delivery process are changed.

In one embodiment, the amount of delivery processes is changed.

In one embodiment, the cleaning module is further configured to check, whether the bucket deliverer's metadata comprises other deliverer identifiers identifying delivery processes that process the same data type; check, whether there exists a deliverer end time for each deliverer identifier; and update the status information in the bucket metadata to 'delivered', when there exists a deliverer end time for each deliver identifier.

In the invention, all delivery processes may run in parallel and are isolated from each other. Therefore, the delivery processes can address the same bucket simultaneously, which gives the system ability to be parallelized and scaled up or out when performance boost is needed.

The advantages of the invention relate to improved source data handling stored in the staging area. For example, the loading process may be executed independently from the delivery process(es). Correspondingly, the delivery process(es) may be executed independently from the loading process as long as there are buckets in the staging table that are not processed yet.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** **one** example of a simple prior art data collection and analyzing architecture;
**Figure 2** discloses a general model of a data management system according to one embodiment of the invention;
**Figure 3A** explains the operation of a loading process in a data management system according to one embodiment of the invention;
**Figure 3B** one possible form of bucket metadata according to one embodiment of the invention;
**Figure 3C** explains the operation of a loading process in a data management system according to another embodiment of the invention;
**Figure 4** discloses metadata relating to a delivery process according to one embodiment of the invention;
**Figure 5A** explains the operation of a delivery process in a data management system according to one embodiment of the invention;
**Figure 5B** discloses bucket deliverer's metadata according to one embodiment of the invention;
**Figure 5C** explains the operation of a delivery process in a data management system according to another embodiment of the invention;
**Figure 5D** explains the operation of a delivery process in the data management system according to another embodiment of the invention;
**Figure 6A** discloses a partition cleaning process according to one embodiment of the invention;
**Figure 6B** discloses a partition cleaning process according to another embodiment of the invention;
**Figure 7** discloses an example of prioritization of delivery processes according to one embodiment of the invention; and
**Figure 8** discloses a data management system according to one embodiment of the invention.

### DETAILED DESCRIPTION OF THE INVENTION

Reference will now be made in detail to the embodiments of the present invention, examples of which are illustrated in the accompanying drawings.

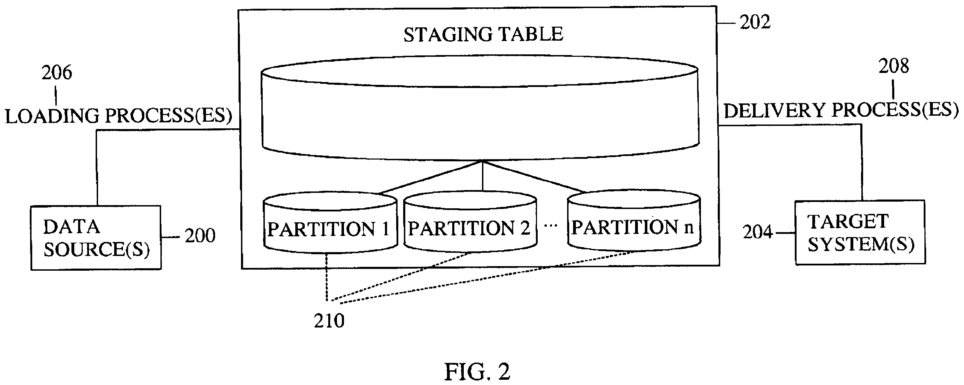

Figure 2 represents a general model of a data management system according to one embodiment of the invention. The model includes at least one data source 200 that is e.g. a database, a flat file, an xml file, message queue etc. Data is read from the data source 200 into a staging area 202 (or staging table) in variable row amounts. The amount of rows loaded from the data source at a time may be e.g. fixed on a system level. In another embodiment, the amount of rows may be variable and it can be determined upon starting a loading process 206 e.g. from a parameter or a parameter file. The concept of varying the amount of rows to be loaded from the data source will be discussed in more detail later.

A term "bucket" or "bucketing" will be used throughout the description to represent the amount of data (e.g. data rows) loaded from the data source 200 at a time.

When a bucket has been read from the data source 200, the data management system determines a unique identifier for the bucket. In one embodiment, the identifier is unique only among the buckets of the same data type. In another embodiment, the identifier is unique among all buckets of all data types. When the unique identifier has been determined for the bucket, the data management system creates a new partition 210 in the staging table 202 for the bucket. At the same time, the partition may be given an identifier. Let's assume that the unique identifier for the bucket would be *00000001.* In this case, the identifier for the partition could be e.g. *stage_cust123trans_p00000001. Cust123* identifies the customer and *trans* identifier the data type (in this case, transaction). P refers to partition and *00000001* is the bucket identifier. Therefore, in one embodiment, the partition identifier directly identifies also the bucket identifier. If the partition identifier does not directly identify also the bucket identifier, in one embodiment, there is a mapping table that creates a mapping between the partition identifier and the bucket identifier.

The data stored in the partitions 210 in the staging table 202 is processed by one or more delivery processes 208. Independently of the loading processes 206 that load data to the stating table 200 from the data source(s) 200, the delivery processes 208 process data stored in the partitions 210. The delivery processes deliver data to target system(s) 204, e.g. to a data warehouse population, data mart population or external interfaces or authorities. There may be several delivery processes that are run in parallel manner.

The loading processes 206 and delivery processes will be discussed in more detail shortly.

The principal idea in the data management system disclosed in Figure 2 is that data is loaded from the data source(s) 200 into separate partitions 210 in the staging table 202. Due to this fact, there are no data locking problems while the data is processed since each partition is a separate physical structure.

Furthermore, in yet another embodiment of the invention there are further advantages. The processes are implemented with asynchronous process modules. Therefore, the modules are detached from each other and they communicate only through common administrative data model or data layer. In other words, the loading processes 206 and delivery processes 208 operate independently from each other. Furthermore, all delivery processes may be run in parallel and they may be isolated from each other. Each delivery process can address the same bucket simultaneously which gives the system ability to be parallelized and scaled up or out when performance boost is needed.

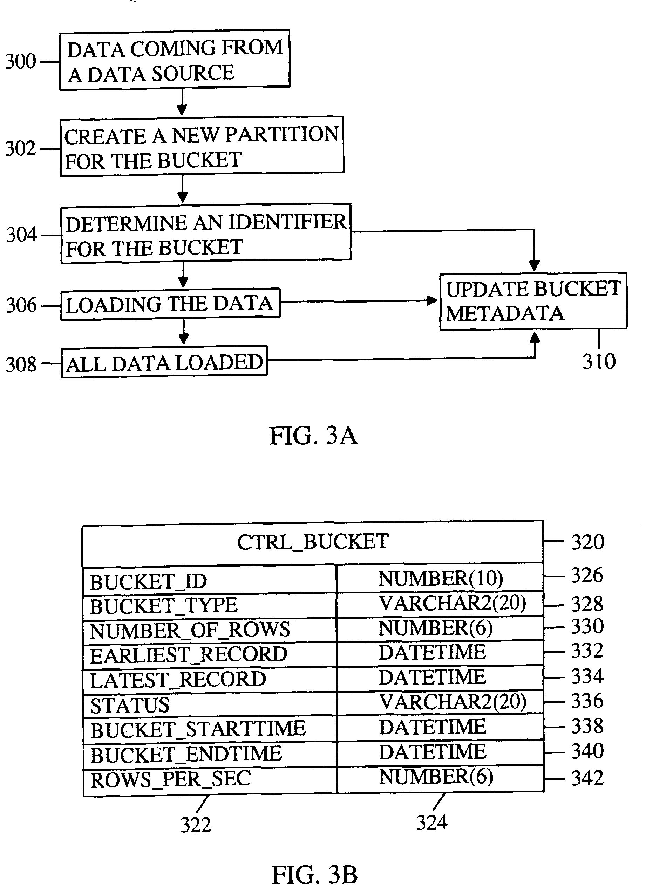

Figure 3A explains the operation of a loading process in the data management system according to one embodiment of the invention. The operation is explained together with Figure 3B which represents one possible alternative for bucket metadata. The bucket metadata 320 stores information about the bucket. The term 'metadata' is used throughout the description to refer to system information that determines general properties for e.g. data buckets and delivery processes.

When a data source starts to provide data (step 300), a new partition is created for the data (step 302) in a staging table. Before the partition is created for the data, it may be necessary to create a zero partition in the staging table. The zero partition is never touched and therefore there is always one partition (zero partition) in the staging table. In the following a term "bucket" refers to a certain amount of source data that is loaded at a time from the data source. The bucket size may be predetermined (e.g. 50000 rows) . In other words, it may be fixed on system level. It may also be variable called upon stage load process launch via parameter or parameter file or it may be decided on performance metrics from metadata on process launch time. An identifier is determined for the bucket (step 304). In one embodiment, the identifier is unique only among the buckets of the same data type. In another embodiment, the identifier is unique among all buckets of all data types. The data management system comprises a control bucket 310 (in other words, a control table or bucket metadata) which stores various pieces of information about the bucket. When the partition has been created and the identifier determined, the loading process updates the bucket metadata 320 and add a new entry (i.e., a new row) for the bucket. The following pieces of information are added or updated for the bucket in the bucket metadata:
- *BUCKET_ID* (326). E.g. a sequential number starting from 1. Each bucket has a unique identifier (e.g. number). In one embodiment, if the identifiers are sequentially allocated, the identifiers also determine the loading order of buckets into the stating table. In other words, a bucket having a smaller identifier than that of another bucket has been loaded and stored earlier.
- *BUCKET_TYPE* (328). BUCKET_TYPE defines the type of the bucket, for example, 'transaction', 'customer data' etc.
- *STATUS (created)* (336). Current status of the bucket, for example, 'created', 'loading', 'delivering', 'delivered', 'deleted' etc.

When the data loading actually starts (step 306), the actual data rows may be tagged with the bucket identifier (e.g. there is added a bucket_id column to the staging table) and the following pieces of information are added or updated for the bucket in the bucket metadata:
- *STATUS (loading)* (336).
- *BUCKET_STARTTIME* (338). This information indicates a timestamp of the creation of the bucket.

When the bucket has been loaded, the following pieces of information are updated for the bucket in the bucket metadata:
- *NUMBER_OF_ROWS* (330). The number of rows in the bucket.
- *EARLIEST_RECORD* (332). Timestamp of the earliest record/transaction in the bucket.
- *LATEST_RECORD* (334). Timestamp of the latest record/transaction in the bucket.
- *STATUS* (loaded) (336). Current status of the bucket.
- *BUCKET ENDTIME* (340). Timestamp after finalizing the bucket (all data has been loaded in the partition).
- *ROWS_PER_SEC* (342). The number of rows loaded in the staging table per second.

The column 322 refers to the used variables in general and the column 324 indicates a variable type of each variable. Furthermore, although Figure 3A represents that bucket metadata is updated after certain steps, it is also possible to update the bucket metadata in different process stages than disclosed in Figure 3A. Furthermore, Figure 3B discloses only one embodiment of possible bucket metadata, and therefore in other embodiments the bucket metadata may differ from the bucket metadata disclosed in Figure 3B. For example, at least one of ROWS_PER_SEC, BUCKET_STARTTIME and BUCKET_ENTTIME may be missing in other embodiments or there may be some additional metadata entries.

In one embodiment of the invention, bucketing (that is, the amount of rows) is done initially based on an initial value. Later on based on e.g. the metrics collected from stage loading and data delivery operations may change the initial value. Furthermore, bucket metadata may contain also performance metrics which can be utilized continuously on future bucket sizing functions for best performance (for example, auto throttling, the loading system can adjust itself based on the collected metrics for best possible throughput, central processing unit utilization etc.).

Summarizing the above, buckets contain 1 to n rows of data (variable bucket size) and each bucket is represented by a partition on the staging table. In one embodiment, if there multiple data types, each different data type uses a dedicated staging table. Partitioning the staging table (e.g. a range or a list) is done e.g. based on the bucket identifier which is unique either inside each data type or the whole system. Furthermore, the bucketing also isolates the reading operations. Partitioning the data by buckets enables the data delivery processes to address only the rows of the distinct bucket without indexing the tables. With this structure the staging tables do not have to have any indexes to give performance on bucket reads. Actually, indexing on staging tables may bring lower performance on populating the staging tables on initial load.

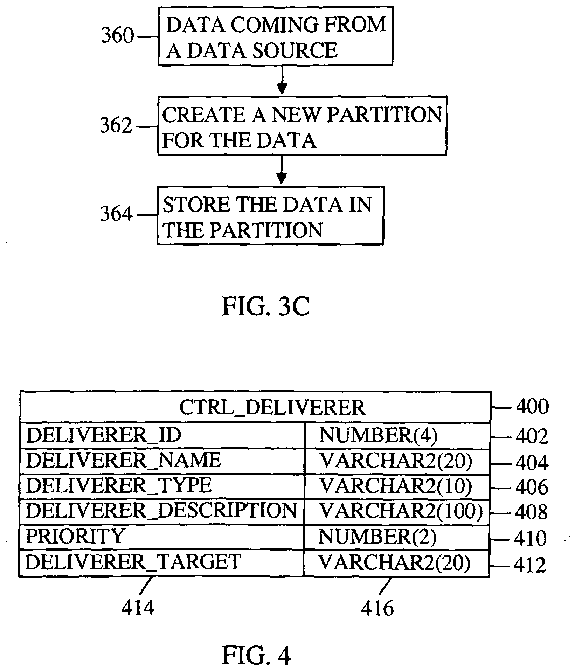

Figure 3C explains the operation of a loading process in the data management system according to another embodiment of the invention.

When a data source starts to provide data (step 360), a new partition is created for the data (step 362) in a staging table. Before the partition is created for the data, it may be necessary to create a zero partition in the staging table. The zero partition is never touched and therefore there is always one partition (zero partition) in the staging table. The data is then stored in the created partition. The same loading process repeats when new data is ready to the loaded into the staging table. The loading process again creates a new partition for the new data and stores the data in the new partition (step 364). The partitions are preferably identified e.g. by sequential numbers. The next set of source data is stored in a partition whose identifier is greater than that of the previous partition. Therefore, the order of the partition identifies also the loading order of the source data in the partitions.

Figure 4 discloses possible metadata 400 relating to a delivery process according to one embodiment of the invention. A delivery process is a process that reads partitions in a staging table and delivers the data (rows) from the partitions to a target system or target systems. The target system may include e.g. one of the following: a data warehouse structure population, a data mart population, external interfaces and authorities.

The data management system may comprise built-in delivery processes. In another embodiment, it is possible to define new delivery processes as the need arises. The amount of delivery processes is not limited to any certain amount. There can be as many delivery processes as the data management system needs to have. In one embodiment, delivery processes may be prioritized. In other words, for example in one case a data warehouse structure population must be done before any other delivery process is allowed to touch the same bucket. In another embodiment, all the delivery processes stand on the same line and they all can run in parallel.

In the embodiment of Figure 4, each delivery process has been assigned the following metadata:
- *DELIVERER_ID* (402). Unique identifier for the deliverer (i.e. delivery process).
- *DELIVERER_NAME* (404). Name of the delivery process, for example, 'STORAGE', 'DATAMART_SALES', 'DATAMART_OUTLET' etc.
- *DELIVERER_TYPE* (406). Type of the delivery process, for example, 'DW', 'Datamart', 'Interface' etc.
- *DELIVERER_DESCRIPTION* (408). Short description of the delivery process, for example, 'DW population', 'Sales datamart population', 'Interface 1 to authorities' etc.
- *PRIORITY* (410). Priority of the delivery process.
- *DELIVERER_TARGET* (412). Type of the data that the delivery process delivers, for example, 'customer data'. This variable links to BUCKET_TYPE variable in the bucket metadata.

Figure 4 discloses only one embodiment of possible deliverer metadata, and therefore in other embodiments the deliverer metadata may differ from the metadata disclosed in Figure 4. For example, in other embodiment some metadata entries may be missing or there may be some additional metadata entries.

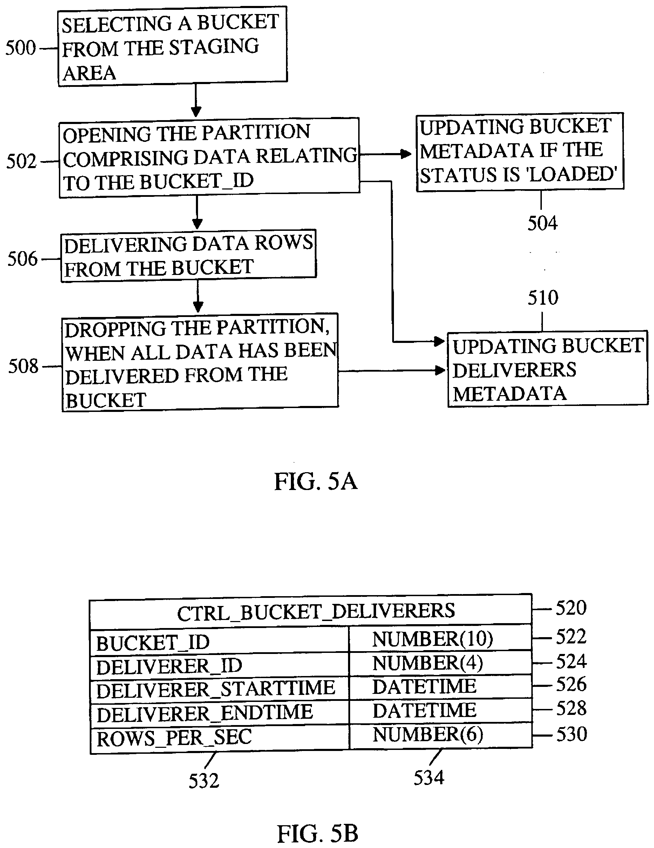

Figure 5A explains the operation of a delivery process in the data management system according to one embodiment of the invention. The operation is explained together with Figure 5B which represents one possible alternative for bucket deliverer's metadata 520. The bucket metadata stores information about the bucket.

A delivery process selects a bucket from the staging area (step 500). The delivery process may select the bucket by determining the smallest bucket identifier which points to a bucket that has not yet been processed. In another embodiment, the bucket selection may be made based on a timestamp in the metadata relating to the bucket. The timestamp used may e.g. be the one that identifies when the bucket has been created. Yet in another embodiment, the selection may be made based on both the bucket identifier and the timestamp. This may be the case e.g. when the sequential identifier "turns" over, that is, starts again from number one. In this case, the bucket having a bucket identifier "1" is not the earliest one since the bucket numbering has started again from the beginning. Therefore, the delivery process may also use the timestamp value in the bucket metadata in determine which one of the buckets is the earliest one. In this example, the buckets are processed in the same order that they were stored in partitions in the loading process. One way to implement is that a sequential identifier is assigned for each bucket. When comparing the identifier, a smaller identifier refers to an earlier bucket.

The delivery process opens the partition holding the data of the bucket identifier (step 502) . When the status of a bucket in the bucket metadata is 'loaded', the bucket is waiting for the delivery process to start processing the bucket. 'Loaded' means that the bucket has been successfully loaded into the staging table. When the delivery process starts to process the determined bucket, the status of the bucket is updated as 'delivering' in the bucket metadata (step 504). If the status of the bucket is already 'delivering', it means that that are several different delivery processes that may process the bucket at the same time. Furthermore, if the status of the bucket is already 'delivering', the delivery process leaves the bucket metadata untouched.

When the delivery process starts to deliver data rows from the staging table, each delivery process processing the bucket creates (step 510) a new row with the following pieces of information in the bucket deliverer's metadata 520:
- *BUCKET_ID* (522). E.g. a sequential number starting from 1. Each bucket has a unique identifier (number). In one embodiment, if the identifiers are sequentially allocated, the identifiers also determine the loading order of buckets into the stating table. In other words, a bucket having a smaller identifier than that of another bucket has been loaded and stored earlier.
- *DELIVERER_ID* (524). Deliverer identifier.
- *DELIVERER_STARTTIME* (526). Timestamp, when the deliver started processing.

Next, the delivery process starts to deliver data rows from the bucket (partition) (step 506). When the deliverer has delivered all the data (rows) contained in the bucket, the bucket deliverer's metadata is again updated (step 510) and the partition is dropped (step 508):
- *DELIVERER_ENDTIME* (528). Timestamp, when the deliver ended processing.
- *ROWS_PER_SEC* (530). The number of rows delivered per second.

The column 532 refers to the used variables in general and the column 534 indicates a variable type of each variable. The length disclosed after each variable type gives one possible length and thus also other lengths can be implemented. Furthermore, although Figure 5A represents that the bucket metadata is updated after certain steps, it is also possible to update the metadata in different process stages than disclosed in Figure 5A. Furthermore, Figure 5B discloses only one embodiment of possible bucket deliverer's metadata, and therefore in other embodiments the metadata may differ from the metadata disclosed in Figure 4. For example, in other embodiment some metadata entries may be missing or there may be some additional metadata entries.

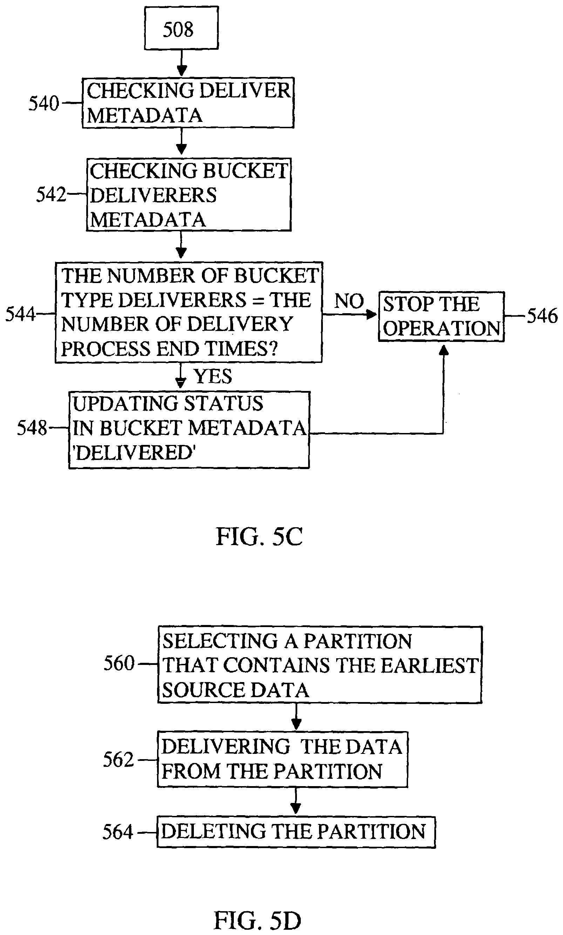

Figure 5A disclosed an embodiment in which a delivery process does not itself update the status information in the bucket metadata as 'delivered'. Figure 5C discloses another embodiment in which the last delivery process processing a bucket (partition) also updates the bucket metadata.

The processing starts from step 508 of Figure 5A. The delivery process checks from the deliverer metadata (see Figure 4) how many delivery processes are assigned to process this particular bucket type (step 540). Next the delivery process checks from the bucket deliverer's metadata the number of delivery process end times for the bucket type (step 542). If the number of delivery processes assigned to process the bucket type is the same as the number of end times in the bucket deliverer's metadata (step 544), it means that all the delivery processes assigned to process the bucket type have already performed their processing. Therefore, the delivery process updates the status information in the bucket metadata as 'delivered' (step 548). If the number of delivery processes assigned to process the bucket type is not the same as the number of end times in the bucket deliverer's metadata, it means that at least one delivery process has not done its processing on the bucket.

Figure 5D explains the operation of a delivery process in the data management system according to another embodiment of the invention. In this embodiment, the data management system comprises only one delivery process.

The delivery process selects from a staging table a partition that contains the earliest source data (step 560). The earliest source data is determined e.g. by partition identifiers. In one embodiment, the partition having the smallest partition identifier contains the earliest source data. In other words, the delivery process processes the data in the staging table by the "first in first out" principle. The oldest partition is processed first. When the oldest partition has been determined, source data stored in the partition is delivered to at least one target system (step 562). When all the data contained in the partition has been delivered, the partition is deleted (step 564).

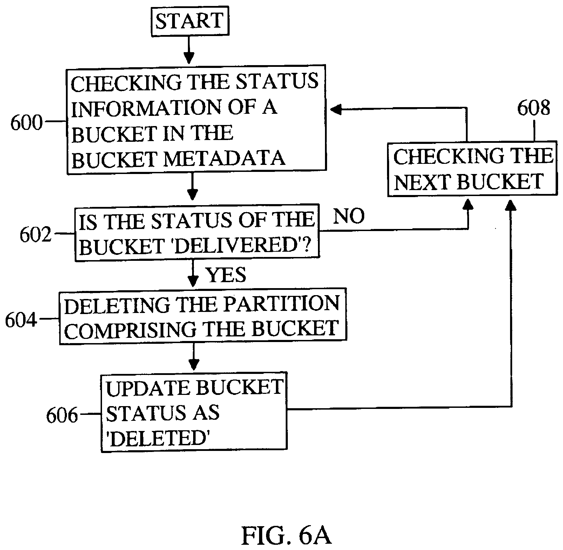

Figure 6A discloses a partition cleaning process according to one embodiment of the invention. The partition cleaning process disclosed in Figure 6A is not tied to the earlier disclosed loading and delivering process. In other words, the partition cleaning process operates as an independent demon process.

When the processing starts, the cleaning process checks the status information of a bucket in the bucket metadata (step 600). If the status information of the bucket is 'delivered' (step 602), it means that all delivery processes have performed their processing. Therefore, when the status information of the bucket is 'delivered', the partition comprising the bucket is deleted (step 604). After that the status information for the bucket in the bucket metadata is updated to 'deleted'. The processing advances to step 608 in which the cleaning process starts the same processing for a next bucket. If the status information of the bucket was not 'delivered' (step 602), the processing advances directly to step 608 in which the cleaning process starts the same processing for a next bucket.

In one embodiment of Figure 6A, the cleaning process in run at predetermined intervals. The interval is determined e.g. by a system parameter. The parameter may e.g. determine that the cleaning process in executed e.g. once in an hour, in two hours, in six hours, in one day or any other appropriate interval.

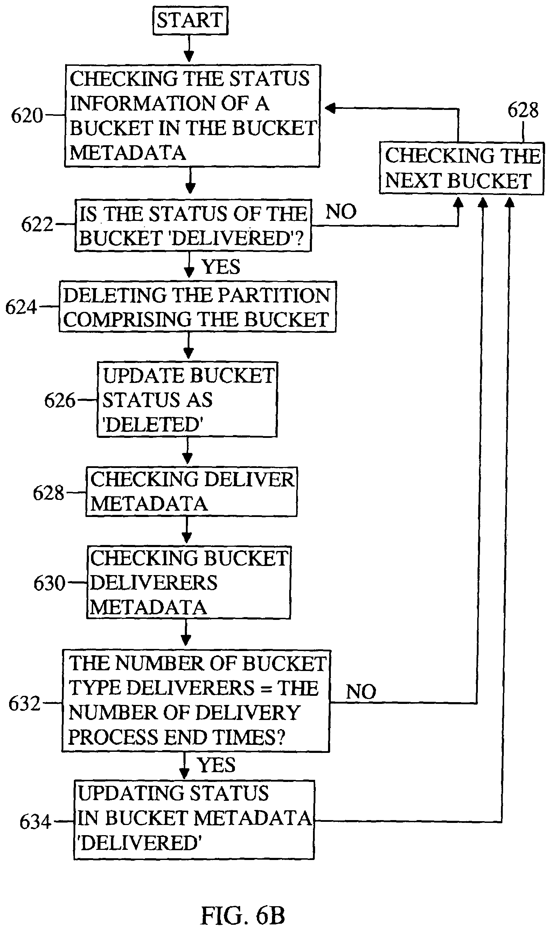

Figure 6B discloses a partition cleaning process according to one embodiment of the invention. The partition cleaning process disclosed in Figure 6B is not tied to the earlier disclosed loading and delivering process. In other words, the partition cleaning process operates as an independent demon process.

When the processing starts, the cleaning process checks the status information of a bucket in the bucket metadata (step 620). If the status information of the bucket is 'delivered' (step 622), it means that all delivery processes have performed their processing. Therefore, when the status information of the bucket is 'delivered', the partition comprising the bucket is deleted (step 624). After that the status information for the bucket in the bucket metadata is updated to 'deleted' (step 626). The processing advances to step 628 in which the cleaning process starts the same processing for a next bucket. If the status information of the bucket was not 'delivered' (step 622), the processing advances directly to step 628 in which the cleaning process starts the same processing for a next bucket.

When the bucket metadata has been updated in step 626, the cleaning process checks from the deliverer metadata (see Figure 4) how many delivery processes are assigned to process this particular bucket type (step 628). Next the cleaning process checks from the bucket deliverer's metadata the number of delivery process end times for the bucket type (step 630). If the number of delivery processes assigned to process the bucket type is the same as the number of end times in the bucket deliverer's metadata (step 632), it means that all the delivery processes assigned to process the bucket type have already performed their processing. Therefore, the cleaning process updates the status information in the bucket metadata as 'delivered' (step 634). If the number of delivery processes assigned to process the bucket type is not the same as the number of end times in the bucket deliverer's metadata, it means that at least one delivery process has not done its processing on the bucket. If a delivery process has not finished its processing (and the status in the bucket metadata is still 'delivering'), the cleaning process continues to step 628 in which the cleaning process starts the same processing for a next bucket.

In one embodiment of Figure 6B, the cleaning process in run at predetermined intervals. The interval is determined e.g. by a system parameter. The parameter may e.g. determine that the cleaning process in executed e.g. once in an hour, in two hours, in six hours, in one day or any other appropriate interval.

By utilizing bucketing via range or list partitioning it is possible to ensure that the performance of the staging tables is the highest possible. There will be no issues of rising high watermarks or staging table rebuilds as the deletion of rows of a bucket addresses only a table partition. An actual bucket deletion (when all delivery processes processing a bucket have finished) happens via table partition dropping, not by deleting rows. The bucket/partition cleanup process will run, in one embodiment, asynchronously with delivery processes and operations of the cleanup process are done based on administrative metadata from process status tables.

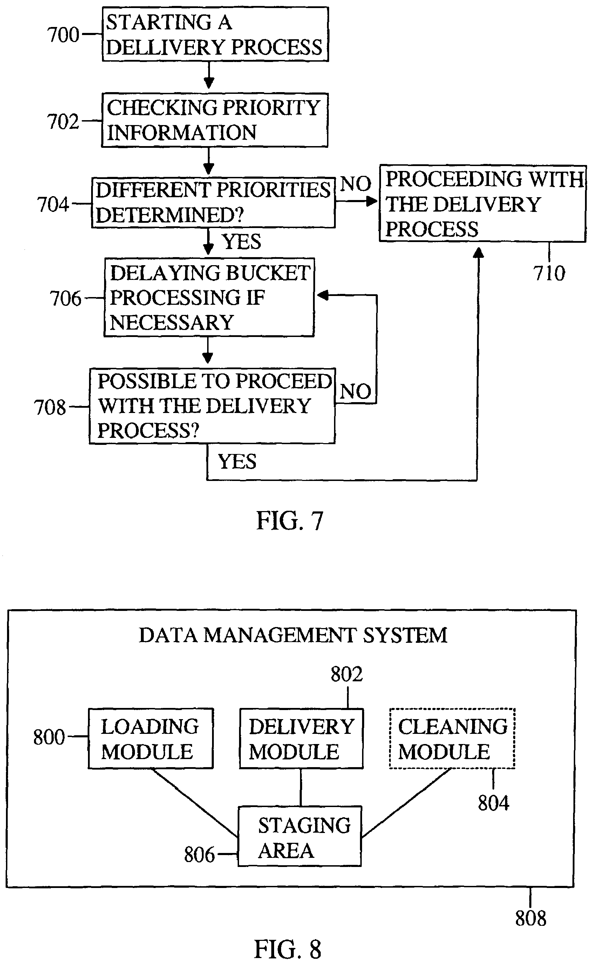

Figure 7 discloses an example of prioritization of delivery processes according to one embodiment of the invention. When a delivery process start processing a bucket (a partition) (step 700), it checks priority information relating to the delivery processes in general (step 702). For example, a system designer may have prioritized some delivery processes before others. A first delivery process, for example, may have a priority 01 in its priority field (step 704). At the same time, a second delivery process may have a priority 02 in its priority field. This means, for example, that the first delivery process has to be finished before the second delivery process may start processing the same bucket (step 706). The first delivery process may determine, for example, from the bucket deliverer's metadata (see Figure 5B) whether the second delivery process has finished its processing with the bucket. If, in this case, there is an end time updated in the bucket deliverer's metadata for the second delivery process (step 708), the first delivery process is now able to may proceed with its bucket processing (step 710).

If all the delivery processed have the same priority or there has not been assigned priorities to the delivery processes at all, the delivery process may proceed with its bucket processing (step 710).

The above prioritization example was described by using only two delivery processes. It is evident to a man skilled in the art that there may be more than two delivery processes which have been prioritized based on some prioritization scheme.

Figure 8 discloses a data management system 808 according to one embodiment of the invention. The data management system comprises a loading module 800 for loading data in a data managing system. The loading module 800 is configured to execute the following source data loading process loop at least once for a data type of the source data: load source data from a data source, wherein the loaded amount of source data constitutes a bucket; determine a unique identifier for the bucket based on an identifier scheme; create a new partition in a staging area 806 for the bucket; and store the bucket in the partition.

The data management system further comprises a delivery module 802 for delivering data in a data managing system. The delivery module 802 is configured to execute the following delivery process at least once for a data type of the source data: select a bucket from the staging area 806, wherein the staging area 806 comprises at least one partition, each partition storing a bucket comprising source data loaded from at least one data source; deliver the bucket stored in the partition to a target system; and update bucket delivers metadata.

The data management system may also comprise a cleaning module 804 for cleaning at least one staging area 806 in the data managing system. The dashed line of the box 804 means that the cleaning module may be an optional feature. Further, the cleaning operations may also be executed manually e.g. by an administrator. If there is a cleaning module in the data management system, the cleaning module 804 is configured to execute the following cleaning process at predefined time intervals for a bucket type: check, whether the status of a bucket is 'delivered' in a bucket metadata; delete the partition, from the staging area 806, containing the bucket; and update the status of the bucket to 'deleted' in the bucket metadata.

The embodiment described above discloses that the cleaning process is an automatic process. In another embodiment of the invention, the cleaning process may be executed manually. Needed actions are executed e.g. by a database administrator.

In another embodiment of Figure 8, the loading module may be simpler than disclosed above. When a data source starts to provide data, the loading module 800 is configured to crate a new partition in the staging area 806. Before the partition is created for the data, it may be necessary to create a zero partition in the staging table. The zero partition is never touched and therefore there is always one partition (zero partition) in the staging table. The data is then stored in the created partition. The operation of the loading module repeats when new data is ready to the loaded into the staging area 806. The loading module again creates a new partition for the new data and stores the data in the new partition. The partitions are preferably identified e.g. by sequential numbers. The next set of source data is stored in a partition whose identifier is greater than that of the previous partition. Therefore, the order of the partitions identifies also the loading order of the source data in the partitions.

When source data is to be delivered, the delivery module 802 is configured to select from the staging area 806 a partition that contains the earliest source data. The earliest source data is determined e.g. by partition identifiers. In one embodiment, the partition having the smallest partition identifier contains the earliest source data. In other words, the delivery process processes the data in the staging table by the "first in first out" principle. The oldest partition is processed first. When the oldest partition has been determined, the delivery module 802 is configured deliver the stored source data to at least one target system. When all the data contained in the partition has been delivered, the delivery module 806 is configured to delete the partition.

In one embodiment of the invention, it is possible to limit the number of simultaneously performed delivery processes. This can be achieved, for example, with a system metadata that determines how many delivery processes can be executed simultaneously.

In one embodiment of the invention, simultaneously with populating the bucket partition the data may be loaded into, for example, flat files for archival, backup and possible reload purposes. This way it is possible to hold only the needed amount of buckets in the staging table and fetch the older buckets from a file system if necessary.

In one embodiment of the invention, the invention enables also the reload of a bad data bucket (bucket containing illegal or corrupted data from a source system or changed processing logic in delivery process). The data can easily be identified by its bucket identifier if bad data is loaded, for example, to data warehouse structures, data marts or external interfaces. Deletion of the data and reloading the bucket will be fast as the data structures in the data warehouse, data marts or external interfaces will be indexed also based on the bucket identifier. If buckets are kept in the staging table for a day or more, the possible reloading is much easier as the reload data already resides in the database structures (the staging table) and there is no need to fetch it from the backup files.

In one embodiment of the invention, the invention is able to provide an auto throttle feature. The data management system may monitor what is, for example, the relationship between throughput and bucket size. Based on the monitoring, it is possible to change the bucket size dynamically based on various emphasizes, for example:
- the creation of buckets is as fast as possible
- the creation of buckets is as fast as possible and the delivery processes work as fast as possible
- the delivery processes work as fast as possible.

In other words, the data management system may optimize the bucket size based on different emphasizes.

According to one embodiment of the invention, the invention combines all process parts in one manageable solution, resulting in a flexible loading scheme based on bucketed incoming data and collected process flow information. The method also detaches the solution from the distinctive contents of a single data flow giving perspective on whole process and resource usage. Furthermore, because data loading and data delivery are separate and independent processes, they can be executed asynchronously.

Furthermore, the present invention solves the overall challenges, for example, for data warehousing process of 24/7 (or near-realtime) environments. Particularly, the invention solves the problem of staging table (area) handling, which typically faces the challenges of rising high water marks, lack of load throttling based on metrics collected, identifying bad buckets of data, reloading and process part isolation.

In general, the invention is applicable for all environments that can utilize range or list partitioning on tables. Databases supporting either of these partitioning schemes are e.g. Oracle, MySQL, DB2 v9 (Viper), Teradata and also partly Microsoft SQLServer and Sybase.

The exemplary embodiments can include, for example, any suitable servers, workstations, and the like, capable of performing the processes of the exemplary embodiments.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Object Request Broker Architecture (COR-BA) objects, and the like. Moreover, parts of the processing of the exemplary embodiments of the present inventions can be distributed for better performance, reliability, cost, and the like.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CDR, CD-RW, DVD, DVD-ROM, DVD±RW, DVD±R, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. A computer-implemented method for processing data in a data managing system comprising at least one staging area (202) into which data can be loaded,
**characterised in that** the method comprises:
executing the following source data loading process (206) at least once for a data type of source data:
loading source data from a data source (200) storing source data as rows of data, wherein the loaded amount of source data constitutes a bucket and wherein the bucket comprises at least one row of data;
creating a new partition (210) in a staging area for the bucket;
determining a unique identifier for the bucket, the unique identifier being unique among buckets of the same data type or among all buckets of all data types;
assigning a partition identifier for the partition (210), the partition identifier comprising the unique identifier of the bucket;
tagging each row of data in the bucket with the unique identifier;
storing the bucket in the partition identified by the partition identifier; and
generating bucket metadata for the bucket, the bucket metadata determining properties for the bucket stored in the partition,
executing the following delivery process (208) at least once for a bucket, the delivery process acting as a bucket deliverer having associated metadata:
selecting a bucket stored by the loading process in a partition of a staging area (202);
delivering the selected bucket to a target system (204); and
updating in bucket deliverer's metadata that the delivery process (208) has finished processing the bucket;
executing the following cleaning process at predefined time intervals for a bucket;
checking, from the bucket metadata of a bucket, whether the bucket has been processed by all delivery processes (208) processing the bucket;
dropping the partition containing the bucket, when all delivery processes (208) processing the bucket have processed the bucket; and
updating in the bucket metadata that the bucket has been dropped.
wherein the loading process (206), the delivery process (208) and the cleaning process are executed asynchronously.

2. The method according to claim 1, wherein the bucket metadata comprises at least one of the following:
bucket identifier;
bucket type;
number of records in the bucket;
earliest record in the bucket;
latest record in the bucket;
status of the bucket;
bucket start time;
bucket end time; and
loaded rows per second.

3. The method according to any of claims 1 - 2, further comprising:
storing a duplicate of the bucket into an additional data store during the loading process (206); and
providing the duplicate data with the same unique identifier.

4. The method according to any of claims 1 - 3, wherein the bucket size is fixed.

5. The method according to any of claims 1 - 3, further comprising:
changing the bucket size at least once.

6. The method according to claim 1, wherein the selecting comprises at least one of the following:
selecting the bucket based on a bucket identifier; and
selecting the bucket based on a time stamp in a bucket metadata.

7. The method according to claim 1, wherein during the execution of the delivery process (208), the method further comprises:
updating status information of the bucket in the bucket metadata to 'delivering', when the delivery process starts delivering the data in the bucket.

8. The method according to any of claims 1 - 7, wherein during the execution of the delivery process (208), the method further comprises:
updating bucket deliverer's metadata, when the delivery process starts processing the bucket, the updating comprising:
adding a deliverer identifier in the bucket deliverer's metadata; and
adding a deliverer start time in the bucket deliver's metadata.

9. The method according to claim 8, wherein during the execution of the delivery process (208), the method further comprises:
updating the bucket deliverer's metadata, when the delivery process ends processing the bucket, the updating comprising:
adding a deliverer end time in the bucket deliverer's metadata.

10. The method according to claim 9, wherein during the execution of the cleaning process, the method further comprises:
checking, whether the bucket deliverer's metadata comprises other deliverer identifiers identifying delivery processes (208) that process the same data type;
checking, whether there exists a deliverer end time for each deliverer identifier; and
updating the status information in the bucket metadata to 'delivered', when there exists a deliverer end time for each deliver identifier.

11. The method according to any of claims 1 - 10, wherein the data management system comprises delivery process metadata for each delivery process (208), the metadata comprising at least one of the following:
an identifier of the delivery process;
a name of the delivery process;
a type of the delivery process;
a description for the delivery process;
priority of the delivery process; and
a target bucket type of the delivery process.

12. A computer program comprising program code configured to perform the method of any of claims 1 - 11 when executed in a data processing device.

13. The computer program according to claim 12, embodied on a computer-readable medium.

14. A data management system (808) comprising at least one staging area (806) in which source data can be stored;
**characterised in that** the data management system (808) comprises:
a loading module (800) for loading data in the data management system (808), wherein the loading module (800) is configured to execute the following source data loading process at least once for a data type of source data:
load source data from a data source (200) storing source data as rows of data, wherein the loaded amount of source data constitutes a bucket and wherein the bucket comprises at least one row of data;
create a new partition in a staging area for the bucket;
determine a unique identifier for the bucket, the unique identifier being unique among buckets of the same data type or among all buckets of all data types;
assign a partition identifier for the partition, the partition identifier comprising the unique identifier of the bucket;
tag each row of data in the bucket with the unique identifier;
store the bucket in the partition identified by the partition identifier; and
generate bucket metadata for the bucket, the bucket metadata determining properties for the bucket stored in the partition;
a delivery module (802) for delivering data in the data management system (808), wherein the delivery module (802) is configured to execute the following delivery process (206) at least once for a bucket , the delivery process acting as a bucket deliverer having associated metadata:
select a bucket stored by the loading process in a partition (210) of a staging area (202, 806);
deliver the selected bucket to a target system (204); and
update in bucket deliverer's metadata that the delivery process (206) has finished processing the bucket; and
a cleaning module (804) for cleaning data in the data management system (808), wherein the cleaning module (804) is configured to execute the following cleaning process at predefined time intervals for a bucket:
checking, from bucket metadata of a bucket, whether the bucket has been processed by all delivery processes (206) processing the bucket;
dropping the partition containing the bucket, when all delivery processes (206) processing the bucket have processed the bucket; and
updating in the bucket metadata that the bucket has been dropped;
wherein the loading module (800), the delivery module (802) and the cleaning module (804) are configured to be executed asynchronously.

15. The data management system (808) according to claim 14, wherein the bucket metadata comprises at least one of the following:
bucket identifier;
bucket type;
number of records in the bucket;
earliest record in the bucket;
latest record in the bucket;
status of the bucket;
bucket start time;
bucket end time; and
loaded rows per second

16. The data management system (808) according to any of claims 14 - 15, wherein the loading module is configured to:
store a duplicate of the bucket into an additional data store during the loading process; and
provide the data with the same unique identifier.

17. The data management system (808) according to any of claims 14 - 15, wherein the bucket size is fixed.

18. The data management system (808) according to any of claims 14 - 17, wherein the loading module is configured to:
change the bucket size at least once.

19. The data management system (808) according to claim 14, wherein the delivery module (802) is configured to select the bucket based on at least of the following:
a bucket identifier; and
a time stamp in a bucket metadata.

20. The data management system (808) according to claim 14, wherein the delivery module (802) is configured to:
update status information of the bucket in the bucket metadata to 'delivering', when starting processing the bucket with the delivery process.

21. The data management system (808) according to any of claims 14 - 20, wherein the delivery module (802) is configured to:
update bucket deliverer's metadata, when the delivery module (802) starts processing the bucket, the updating comprising:
adding a deliverer identifier in the bucket deliverer's metadata; and
adding a deliverer start time in the bucket deliver's metadata.

22. The data management system (808) according to claim 21, wherein the delivery module (802) is configured to:
update the bucket deliverer's metadata, when the delivery module (802) ends processing the bucket, the updating comprising:
adding a deliverer end time in the bucket deliverer's metadata.

23. The data management system (808) according to any of claims 14 - 22, wherein the data management system (808) comprises delivery process metadata for each delivery process (206), the metadata comprising at least one of the following:
an identifier of the delivery process;
a name of the delivery process;
a type of the delivery process;
a description for the delivery process;
priority of the delivery process; and
a target bucket type of the delivery process.

24. The data management system (808) according to any of claims 14 - 23, wherein the cleaning module (804) is configured to:
check, whether a bucket deliverer's metadata comprises other deliverer identifiers identifying delivery processes (206) that process the same data type;
check, whether there exists a deliverer end time for each deliverer identifier; and
update the status information in the bucket metadata to 'delivered', when there exists a deliverer end time for each deliver identifier.

## Patentansprüche

1. Computerimplementiertes Verfahren zur Verarbeitung von Daten in einem Datenverwaltungssystem mit mindestens einem Einspeicherungsbereich (202), in welchen Daten geladen werden können,
**dadurch gekennzeichnet, dass** das Verfahren umfasst:
mindestens einmaliges Ausführen des folgenden Quelldatenladeprozesses (206) für einen Datentyp von Quelldaten:
Laden von Quelldaten aus einer Datenquelle (200), welche Quelldaten als Zeilen von Daten speichert, wobei die geladene Menge von Quelldaten einen Eimer darstellt, und wobei der Eimer mindestens eine Zeile von Daten umfasst;
Bilden einer neuen Partition (210) in einem Einspeicherungsbereich für den Eimer;
Bestimmen einer eindeutigen Kennung für den Eimer, wobei die eindeutige Kennung unter Eimern des gleichen Datentyps oder unter allen Eimern aller Datentypen eindeutig ist;
Zuordnen einer Partitionskennung für die Partition (210), wobei die Partitionskennung die eindeutige Kennung des Eimers umfasst;
Kennzeichnen jeder Zeile von Daten im Eimer mit der eindeutigen Kennung;
Speichern des Eimers in der Partition, die durch die Partitionskennung identifiziert wird;
Erzeugen von Eimer-Megadaten für den Eimer, wobei die Eimer-Megadaten Eigenschaften für den Eimer bestimmen, der in der Partition gespeichert wird,
mindestens einmaliges Ausführen des folgenden Zustellprozesses (208) für einen Eimer, wobei der Zustellprozess als Eimerzusteller mit assoziierten Metadaten fungiert:
Auswählen eines Eimers, der durch den Ladeprozess in einer Partition des Einspeicherungsbereichs (202) gespeichert wird;
Zustellen des ausgewählten Eimers an ein Zielsystem (204); und
Aktualisieren in Eimerzusteller-Metadaten, dass der Zustellprozess (208) Verarbeitung des Eimers abgeschlossen hat;
Ausführen des folgenden Löschprozesses in vordefinierten Zeitintervallen für einen Eimer:
Prüfen anhand der Eimer-Metadaten eines Eimers, ob der Eimer durch alle Zustellprozesse (208), die den Eimer verarbeiten, verarbeitet wurde;
Verwerfen der Partition, die den Eimer enthält, wenn alle Zustellprozesse (208), die den Eimer verarbeiten, den Eimer verarbeitet haben; und
Aktualisieren in den Eimer-Metadaten, dass der Eimer verworfen wurde,
wobei der Ladeprozess (206), der Zustellprozess (208) und der Löschprozess asynchron ausgeführt werden.

2. Verfahren nach Anspruch 1, wobei die Eimer-Metadaten mindestens eines von Folgendem umfassen:
Eimerkennung;
Eimertyp;
Anzahl von Datensätzen im Eimer;
frühestem Datensatz im Eimer;
letztem Datensatz im Eimer;
Status des Eimers;
Eimer-Startzeit;
Eimer-Endzeit; und
geladenen Zeilen pro Sekunde.

3. Verfahren nach einem der Ansprüche 1 bis 2, ferner umfassend:
Speichern eines Duplikats des Eimers in einem zusätzlichen Datenspeicher während des Ladeprozesses (206); und
Versehen der duplizierten Daten mit der gleichen eindeutigen Kennung.

4. Verfahren nach einem der Ansprüche 1 bis 3, wobei die Eimergröße fest ist.

5. Verfahren nach einem der Ansprüche 1 bis 3, ferner umfassend:
mindestens einmaliges Ändern der Eimergröße.

6. Verfahren nach Anspruch 1, wobei das Auswählen mindestens eines von Folgendem umfassen:
Auswählen des Eimers basierend auf einer Eimerkennung; und
Auswählen des Eimers basierend auf einem Zeitstempel in Eimer-Metadaten.

7. Verfahren nach Anspruch 1, wobei das Verfahren während der Ausführung des Zustellprozesses (208) ferner umfasst:
Aktualisieren von Statusinformationen des Eimers in den Eimer-Metadaten auf 'Es wird zugestellt', wenn der Zustellprozess mit dem Zustellen der Daten im Eimer beginnt.

8. Verfahren nach einem der Ansprüche 1 bis 7, wobei das Verfahren während der Ausführung des Zustellprozesses (208) ferner umfasst:
Aktualisieren von Eimerzusteller-Metadaten, wenn der Zustellprozess mit der Verarbeitung des Eimers beginnt, wobei das Aktualisieren umfasst:
Hinzufügen einer Zustellerkennung in den Eimerzusteller-Metadaten; und
Hinzufügen einer Zusteller-Startzeit in den Eimerzusteller-Metadaten.

9. Verfahren nach Anspruch 8, wobei das Verfahren während der Ausführung des Zustellprozesses (208) ferner umfasst:
Aktualisieren der Eimerzusteller-Metadaten, wenn der Zustellprozess die Verarbeitung des Eimers beendet, wobei das Aktualisieren umfasst:
Hinzufügen einer Zusteller-Endzeit in den Eimerzusteller-Metadaten.

10. Verfahren nach Anspruch 9, wobei das Verfahren während der Ausführung des Löschprozesses ferner umfasst:
Prüfen, ob die Eimerzusteller-Metadaten andere Zustellerkennungen umfassen, welche Zustellprozesse (208) identifizieren, die den gleichen Datentyp verarbeiten;
Prüfen, ob eine Zusteller-Endzeit für jede Zustellerkennung vorhanden ist; und
Aktualisieren der Statusinformationen in den Eimer-Metadaten auf 'zugestellt', wenn eine Zusteller-Endzeit für jede Zustellerkennung vorhanden ist.

11. Verfahren nach einem der Ansprüche 1 bis 10, wobei das Datenverwaltungssystem Zustellprozess-Metadaten für jeden Zustellprozess (208) umfasst, wobei die Metadaten mindestens eines von Folgendem umfassen:
einer Kennung des Zustellprozesses;
einem Namen des Zustellprozesses;
einem Typ des Zustellprozesses;
einer Beschreibung für den Zustellprozess;
Priorität des Zustellprozesses; und
einem Ziel-Eimertyp des Zustellprozesses.

12. Computerprogramm, umfassend Programmcode, der so konfiguriert ist, dass er bei Ausführung in einer Datenverarbeitungsvorrichtung das Verfahren nach einem der Ansprüche 1 bis 11 durchführt.

13. Computerprogramm nach Anspruch 12, das auf einem computerlesbaren Medium enthalten ist.

14. Datenverwaltungssystem (808), umfassend mindestens einen Einspeicherungsbereich (806), in welchem Quelldaten gespeichert werden können;
**dadurch gekennzeichnet, dass** das Datenverwaltungssystem (808) umfasst:
ein Lademodul (800) zum Laden von Daten im Datenverwaltungssystem (808), wobei das Lademodul (800) so konfiguriert ist, dass es den folgenden Quelldatenladeprozess für einen Datentyp von Quelldaten mindestens einmal ausführt:
Laden von Quelldaten aus einer Datenquelle (200), welche Quelldaten als Zeilen von Daten speichert, wobei die geladene Menge von Quelldaten einen Eimer darstellt, und wobei der Eimer mindestens eine Zeile von Daten umfasst;
Bilden einer neuen Partition in einem Einspeicherungsbereich für den Eimer;
Bestimmen einer eindeutigen Kennung für den Eimer, wobei die eindeutige Kennung unter Eimern des gleichen Datentyps oder unter allen Eimern aller Datentypen eindeutig ist;
Zuordnen einer Partitionskennung für die Partition, wobei die Partitionskennung die eindeutige Kennung des Eimers umfasst;
Kennzeichnen jeder Zeile von Daten im Eimer mit der eindeutigen Kennung;
Speichern des Eimers in der Partition, die durch die Partitionskennung identifiziert wird; und
Erzeugen von Eimer-Megadaten für den Eimer, wobei die Eimer-Megadaten Eigenschaften für den Eimer bestimmen, der in der Partition gespeichert wird;
ein Zustellmodul (802) zum Zustellen von Daten im Datenverwaltungssystem (808), wobei das Zustellmodul (802) so konfiguriert ist, dass es den folgenden Zustellprozess (206) für einen Eimer mindestens einmal ausführt, wobei der Zustellprozess als Eimerzusteller mit assoziierten Metadaten fungiert:
Auswählen eines Eimers, der durch den Ladeprozess in einer Partition (210) des Einspeicherungsbereichs (202, 806) gespeichert wird;
Zustellen des ausgewählten Eimers an ein Zielsystem (204); und
Aktualisieren in den Eimerzusteller-Metadaten, dass der Zustellprozess (206) Verarbeitung des Eimers abgeschlossen hat; und
ein Löschmodul (804) zum Löschen von Daten im Datenverwaltungssystem (808), wobei das Löschmodul (804) so konfiguriert ist, dass es den folgenden Löschprozess für einen Eimer in vordefinierten Zeitintervallen ausführt:
Prüfen anhand von Eimer-Metadaten eines Eimers, ob der Eimer durch alle Zustellprozesse (206), die den Eimer verarbeiten, verarbeitet wurde;
Verwerfen der Partition, die den Eimer enthält, wenn alle Zustellprozesse (206), die den Eimer verarbeiten, den Eimer verarbeitet haben; und
Aktualisieren in den Eimer-Metadaten, dass der Eimer verworfen wurde,
wobei das Lademodul (800), das Zustellmodul (802) und das Löschmodul (804) so konfiguriert sind, dass sie asynchron ausgeführt werden.

15. Datenverwaltungssystem (808) nach Anspruch 14, wobei die Eimer-Metadaten mindestens eines von Folgendem umfassen:
Eimerkennung;
Eimertyp;
Anzahl von Datensätzen im Eimer;
frühestem Datensatz im Eimer;
letztem Datensatz im Eimer;
Status des Eimers;
Eimer-Startzeit;
Eimer-Endzeit; und
geladenen Zeilen pro Sekunde.

16. Datenverwaltungssystem (808) nach einem der Ansprüche 14 bis 15, wobei das Lademodul konfiguriert ist zum:
Speichern eines Duplikats des Eimers in einem zusätzlichen Datenspeicher während des Ladeprozesses; und
Versehen der Daten mit der gleichen eindeutigen Kennung.

17. Datenverwaltungssystem (808) nach einem der Ansprüche 14 bis 15, wobei die Eimergröße fest ist.

18. Datenverwaltungssystem (808) nach einem der Ansprüche 14 bis 17, wobei das Lademodul konfiguriert ist zum:
mindestens einmaligen Ändern der Eimergröße.

19. Datenverwaltungssystem (808) nach Anspruch 14, wobei das Zustellmodul (802) so konfiguriert ist, dass es den Eimer basierend auf mindestens einem von Folgendem auswählt:
einer Eimerkennung; und
einem Zeitstempel in Eimer-Metadaten.

20. Datenverwaltungssystem (808) nach einem der Ansprüche 14 bis 15, wobei das Zustellmodul (802) konfiguriert ist zum:
Aktualisieren von Statusinformationen des Eimers in den Eimer-Metadaten auf 'Es wird zugestellt' bei Beginn der Verarbeitung des Eimers mit dem Zustellprozess.

21. Datenverwaltungssystem (808) nach einem der Ansprüche 14 bis 20, wobei das Zustellmodul (802) konfiguriert ist zum:
Aktualisieren von Eimerzusteller-Metadaten, wenn das Zustellmodul (802) mit der Verarbeitung des Eimers beginnt, wobei das Aktualisieren umfasst:
Hinzufügen einer Zustellerkennung in den Eimerzusteller-Metadaten; und
Hinzufügen einer Zusteller-Startzeit in den Eimerzusteller-Metadaten.

22. Datenverwaltungssystem (808) nach Anspruch 21, wobei das Zustellmodul (802) konfiguriert ist zum:
Aktualisieren der Eimerzusteller-Metadaten, wenn das Zustellmodul (802) die Verarbeitung des Eimers beendet, wobei das Aktualisieren umfasst:
Hinzufügen einer Zusteller-Endzeit in den Eimerzusteller-Metadaten.

23. Datenverwaltungssystem (808) nach einem der Ansprüche 14 bis 22, wobei das Datenverwaltungssystem (808) Zustellprozess-Metadaten für jeden Zustellprozess (206) umfasst, wobei die Metadaten mindestens eines von Folgendem umfassen:
einer Kennung des Zustellprozesses;
einem Namen des Zustellprozesses;
einem Typ des Zustellprozesses;
einer Beschreibung für den Zustellprozess;
Priorität des Zustellprozesses; und
einem Ziel-Eimertyp des Zustellprozesses.

24. Datenverwaltungssystem (808) nach einem der Ansprüche 14 bis 23, wobei das Löschmodul (804) konfiguriert ist zum:
Prüfen, ob Eimerzusteller-Metadaten andere Zustellerkennungen umfassen, welche Zustellprozesse (206) identifizieren, die den gleichen Datentyp verarbeiten;
Prüfen, ob eine Zusteller-Endzeit für jede Zustellerkennung vorhanden ist; und
Aktualisieren der Statusinformationen in den Eimer-Metadaten auf 'zugestellt', wenn eine Zusteller-Endzeit für jede Zustellerkennung vorhanden ist.

## Revendications

1. Procédé mis en oeuvre par ordinateur, pour le traitement de données dans un système de gestion de données comprenant au moins une zone de préparation (202) dans laquelle des données peuvent être chargées,
**caractérisé en ce que** le procédé consiste à :
exécuter au moins une fois le traitement de chargement de données sources suivant (206) pour un type de données de données sources, consistant à :
charger des données sources d'une source de données (200) contenant en mémoire des données sources sous forme de rangées de données, dans lequel la quantité chargée de données sources constitue un groupement et dans lequel le groupement comprend au moins une rangée de données ;
créer une nouvelle partition (210) destinée au groupement dans une zone de préparation ;
déterminer un identificateur unique du groupement, l'identificateur unique étant unique parmi des groupements du même type de données ou parmi tous les groupements de tous les types de données ;
attribuer un identificateur de partition à la partition (210), l'identificateur de partition comprenant l'identificateur unique du groupement ;
étiqueter chaque rangée de données du groupement avec l'identificateur unique ;
mémoriser le groupement dans la partition identifiée par l'identificateur de partition ; et
générer des métadonnées de groupement du groupement, les métadonnées de groupement déterminant des propriétés du groupement mémorisé dans la partition,
exécuter au moins une fois le traitement de distribution suivant (208) pour un groupement, le traitement de distribution servant de distributeur de groupement comportant des métadonnées associées, consistant à :
sélectionner un groupement mémorisé par le traitement de chargement dans une partition d'une zone de préparation (202) ;
distribuer le groupement sélectionné à un système cible (204) ; et
mettre à jour des métadonnées du distributeur de groupement indiquant que le traitement de distribution (208) a terminé de traiter le groupement ;
exécuter le traitement de nettoyage suivant d'un groupement à des intervalles de temps prédéfinis, consistant à :
vérifier, à partir des métadonnées de groupement d'un groupement, si le groupement a fait l'objet de tous les traitements de distribution (208) de traitement du groupement ;
éliminer la partition contenant le groupement, lorsque tous les traitements de distribution (208) de traitement du groupement ont traité le groupement ; et
mettre à jour les métadonnées de groupement indiquant que le groupement a été éliminé,
dans lequel le traitement de chargement (206), le traitement de distribution (208) et le traitement de nettoyage sont exécutés de façon asynchrone.

2. Procédé selon la revendication 1, dans lequel les métadonnées de groupement comprennent au moins l'une des composantes suivantes :
un identificateur de groupement ;
un type de groupement ;
un nombre d'enregistrements dans le groupement ;
l'enregistrement le plus ancien dans le groupement ;
l'enregistrement le plus récent dans le groupement ;
un état du groupement ;
un instant de début de groupement ;
un instant de fin de groupement ; et
les rangées chargées par seconde.

3. Procédé selon l'une quelconque des revendications 1 et 2, consistant en outre à :
mémoriser une reproduction du groupement dans une mémoire de données supplémentaire pendant le traitement de chargement (206) ; et
attribuer le même identificateur unique aux données reproduites.

4. Procédé selon l'une quelconque des revendications 1 à 3, dans lequel le groupement a une taille fixe.

5. Procédé selon l'une quelconque des revendications 1 à 3, consistant en outre à :
modifier au moins une fois la taille de groupement.

6. Procédé selon la revendication 1, dans lequel la sélection comprend au moins l'une des sélections suivantes :
une sélection du groupement sur la base d'un identificateur de groupement ; et
une sélection de groupement sur la base d'une estampille temporelle de métadonnées de groupement.

7. Procédé selon la revendication 1, dans lequel, pendant l'exécution du traitement de distribution (208), le procédé consiste en outre à :
mettre à jour des informations d'état du groupement des métadonnées de groupement à l'état « en cours de distribution », lorsque le traitement de distribution commence la distribution des données du groupement.

8. Procédé selon l'une quelconque des revendications 1 à 7, dans lequel, pendant l'exécution du traitement de distribution (208), le procédé consiste en outre à :
mettre à jour des métadonnées du distributeur de groupement, lorsque le traitement de distribution commence à traiter le groupement, la mise à jour consistant à :
ajouter un identificateur de distributeur aux métadonnées du distributeur de groupement ; et
ajouter un instant de début du distributeur aux métadonnées du distributeur de groupement.

9. Procédé selon la revendication 8, dans lequel, pendant l'exécution du traitement de distribution (208), le procédé consiste en outre à :
mettre à jour les métadonnées du distributeur de groupement, lorsque le traitement de distribution termine le traitement du groupement, la mise à jour consistant à :
ajouter un instant de fin de distributeur aux métadonnées du distributeur de groupement.

10. Procédé selon la revendication 9, dans lequel, pendant l'exécution du traitement de nettoyage, le procédé consiste en outre à :
vérifier si les métadonnées de distributeur de groupement comprennent d'autres identificateurs de distributeur identifiant des traitements de distribution (208) qui traitent le même type de données ;
vérifier la présence éventuelle d'un instant de fin de distributeur de chaque identificateur de distributeur ; et
mettre à jour les informations d'état des métadonnées de groupement à l'état « distribué », lors de la présence d'un instant de fin de distributeur pour chaque identificateur de distribution.

11. Procédé selon l'une quelconque des revendications 1 à 10, dans lequel le système de gestion de données comprend des métadonnées de traitement de distribution pour chaque traitement de distribution (208), les métadonnées comprenant au moins une composante parmi les composantes suivantes :
un identificateur du traitement de distribution ;
un nom du traitement de distribution ;
un type du traitement de distribution ;
une description du traitement de distribution ;
une priorité attribuée au traitement de distribution ; et
un type de groupement cible du traitement de distribution.

12. Programme informatique comprenant un code de programme conçu pour mettre en oeuvre le procédé selon l'une quelconque des revendications 1 à 11 lorsqu'il est exécuté dans un dispositif de traitement de données.

13. Programme informatique selon la revendication 12, intégré à un support lisible par ordinateur.

14. Système de gestion de données (808) comprenant au moins une zone de préparation (806) dans laquelle des données sources peuvent être mémorisées ;
**caractérisé en ce que** le système de gestion de données (808) comprend :
un module de chargement (800) servant à charger des données dans le système de gestion de données (808), dans lequel le module de chargement (800) est configuré pour exécuter au moins une fois le traitement de chargement de données sources suivant pour un type de données de données sources, consistant à :
charger des données sources d'une source de données (200) contenant en mémoire des données sources sous forme de rangées de données, dans lequel la quantité chargée de données sources constitue un groupement et dans lequel le groupement comprend au moins une rangée de données ;
créer une nouvelle partition destinée au groupement dans une zone de préparation ;
déterminer un identificateur unique du groupement, l'identificateur unique étant unique parmi des groupements du même type de données ou parmi tous les groupements de tous les types de données ;
attribuer un identificateur de partition à la partition, l'identificateur de partition comprenant l'identificateur unique du groupement ;
étiqueter chaque rangée de données du groupement avec l'identificateur unique ;
mémoriser le groupement dans la partition identifiée par l'identificateur de partition ; et
générer des métadonnées de groupement du groupement, les métadonnées de groupement déterminant des propriétés du groupement mémorisé dans la partition ;
un module de distribution (802) servant à distribuer des données dans le système de gestion de données, dans lequel le module de distribution (802) est configuré pour exécuter au moins une fois le traitement de distribution suivant (206) pour un groupement, le traitement de distribution servant de distributeur de groupement comportant des métadonnées associées, consistant à :
sélectionner un groupement mémorisé par le traitement de chargement dans une partition (210) d'une zone de préparation (202, 806) ;
distribuer le groupement sélectionné à un système cible (204) ; et
mettre à jour des métadonnées du distributeur de groupement indiquant que le traitement de distribution (206) a terminé de traiter le groupement ; et
un module de nettoyage (804) servant à nettoyer des données dans le système de gestion de données (808), dans lequel le module de nettoyage (804) est configuré pour exécuter le traitement de nettoyage suivant à des intervalles de temps prédéfinis pour un groupement, consistant à :
vérifier, à partir de métadonnées de groupement d'un groupement, si le groupement a été traité par tous les traitements de distribution (206) de traitement du groupement ;
éliminer la partition contenant le groupement, lorsque tous les traitements de distribution (206) de traitement du groupement ont traité le groupement ; et
mettre à jour les métadonnées de groupement indiquant que le groupement a été éliminé ;
dans lequel le module de chargement (800), le module de distribution (802) et le module de nettoyage (804) sont configurés pour une exécution asynchrone.

15. Système de gestion de données (808) selon la revendication 14, dans lequel les métadonnées de groupement comprennent au moins l'une des composantes suivantes :
un identificateur de groupement ;
un type de groupement ;
un nombre d'enregistrements dans le groupement ;
l'enregistrement le plus ancien dans le groupement ;
l'enregistrement le plus récent dans le groupement ;
un état du groupement ;
un instant de début de groupement ;
un instant de fin de groupement ; et
les rangées chargées par seconde.

16. Système de gestion de données (808) selon l'une quelconque des revendications 14 et 15, dans lequel le module de chargement est configuré pour :
mémoriser une reproduction du groupement dans une mémoire de données supplémentaire pendant le traitement de chargement ; et
attribuer le même identificateur unique aux données.

17. Système de gestion de données (808) selon l'une quelconque des revendications 14 et 15, dans lequel le groupement a une taille fixe.

18. Système de gestion de données (808) selon l'une quelconque des revendications 14 à 17, dans lequel le module de chargement est configuré pour :
modifier au moins une fois la taille de groupement.

19. Système de gestion de données (808) selon la revendication 14, dans lequel le module de distribution (802) est configuré pour sélectionner le groupement sur la base d'au moins l'une des composantes suivantes :
un identificateur de groupement ; et
une estampille temporelle des métadonnées de groupement.

20. Système de gestion de données (808) selon la revendication 14, dans lequel le module de distribution (802) est configuré pour :
mettre à jour des informations d'état du groupement des métadonnées de groupement à l'état « en cours de distribution », au début du traitement du groupement au moyen du traitement de distribution.

21. Système de gestion de données (808) selon l'une quelconque des revendications 14 à 20, dans lequel le module de distribution (802) est configuré pour :
mettre à jour des métadonnées du distributeur de groupement, lorsque le module de distribution (802) commence à traiter le groupement, la mise à jour consistant à :
ajouter un identificateur de distributeur aux métadonnées du distributeur de groupement ; et
ajouter un instant de début de distributeur aux métadonnées du distributeur de groupement.

22. Système de gestion de données (808) selon la revendication 21, dans lequel le module de distribution (802) est configuré pour :
mettre à jour les métadonnées du distributeur de groupement, lorsque le module de distribution (802) termine le traitement du groupement, la mise à jour consistant à :
ajouter un instant de fin de distributeur aux métadonnées du distributeur de groupement.

23. Système de gestion de données (808) selon l'une quelconque des revendications 14 à 22, dans lequel le système de gestion de données (808) comprend des métadonnées de traitement de distribution pour chaque traitement de distribution (206), les métadonnées comprenant au moins l'une des composantes suivantes :
un identificateur du traitement de distribution ;
un nom du traitement de distribution ;
un type du traitement de distribution ;
une description du traitement de distribution ;
une priorité attribuée au traitement de distribution ; et
un type de groupement cible du traitement de distribution.

24. Système de gestion de données (808) selon l'une quelconque des revendications 14 à 23, dans lequel le module de nettoyage (804) est configuré pour :
vérifier si des métadonnées du distributeur de groupement comprennent d'autres identificateurs de distributeur identifiant des traitements de distribution (206) qui traitent le même type de données ;
vérifier la présence éventuelle d'un instant de fin de distributeur pour chaque identificateur de distributeur ; et
mettre à jour les informations d'état des métadonnées de groupement à l'état « distribué », lors de la présence d'un instant de fin de distributeur pour chaque identificateur de distributeur.
